(19) Europäisches Patentamt

European Patent Office

Office européen des brevets

(11) EP 0 971 516 A2

(12) EUROPEAN PATENT APPLICATION

(43) Date of publication:
12.01.2000 Bulletin 2000/02

(51) Int. Cl.$^7$: H04L 27/34, H04L 25/497

(21) Application number: 99113555.9

(22) Date of filing: 06.07.1999

(84) Designated Contracting States:
AT BE CH CY DE DK ES FI FR GB GR IE IT LI LU
MC NL PT SE
Designated Extension States:
AL LT LV MK RO SI

(30) Priority: 06.07.1998 IL 12524298

(71) Applicant: Metalink Limited
Tel Aviv 69710 (IL)

(72) Inventors:
• Shukhman, Izvi
56506 Savion (IL)
• Kliger, Abraham
Givataim 53231 (IL)

(74) Representative:
Modiano, Guido, Dr.-Ing. et al
Modiano, Josif, Pisanty & Staub,
Baaderstrasse 3
80469 München (DE)

(54) **Channel precoder using an infinite impulse response filter**

(57) A trellis coded modulation (TCM) transmitter-receiver (transceiver) including a TCM transmitter for transmitting, and a TCM receiver for receiving and decoding a transmitted signal, wherein said transmitter includes a TCM encoder, a precoder, a transmitter and a TCM receiver. The precoder receives the output of the TCM encoder and removes expected intersymbol interference from the output of the TCM encoder. The precoder includes an Infinite Impulse Response (IIR) filter. The transmitter transmits the output of the precoder. The TCM receiver receives and decodes a transmitted signal.

FIG. 3

EP 0 971 516 A2

## Description

### FIELD OF THE INVENTION

The present invention relates generally to high speed data transmission over band limited channels that implement Trellis Coded Modulation (TCM).

### BACKGROUND OF THE INVENTION

Telephone communication lines are band limited channels. Notably however, band limited channels generate high amounts of Inter Symbol Interference (ISI) that significantly distort the received signal. A common way to cope with the ISI is to employ a combination of a Feed-Forward Filter (FFF) and a Feedback Filter (FBF) at the receiver This configuration is called a Decision Feedback Equalizer (DFE). The DFE eliminates ISI by predicting it from former decisions, and subtracting the prediction from the incoming signal. Unfortunately due to this feedback structure, one decision error might generate more errors. This phenomenon is referred to as "error propagation".

High performance, high speed modems use Trellis Coded Modulation (TCM) encoders and decoders in conjunction with DFEs. TCM improves the modem reception performance by reducing its immunity to noise and/or crosstalk TCM can improve modem Immunity to noise by upto 6 dB; however, TCM decoders are very susceptible to the error propagation phenomena of the DFE. A significant loss in coding gain occurs if the TCM decoder is employed in conjunction with a DFE receiver.

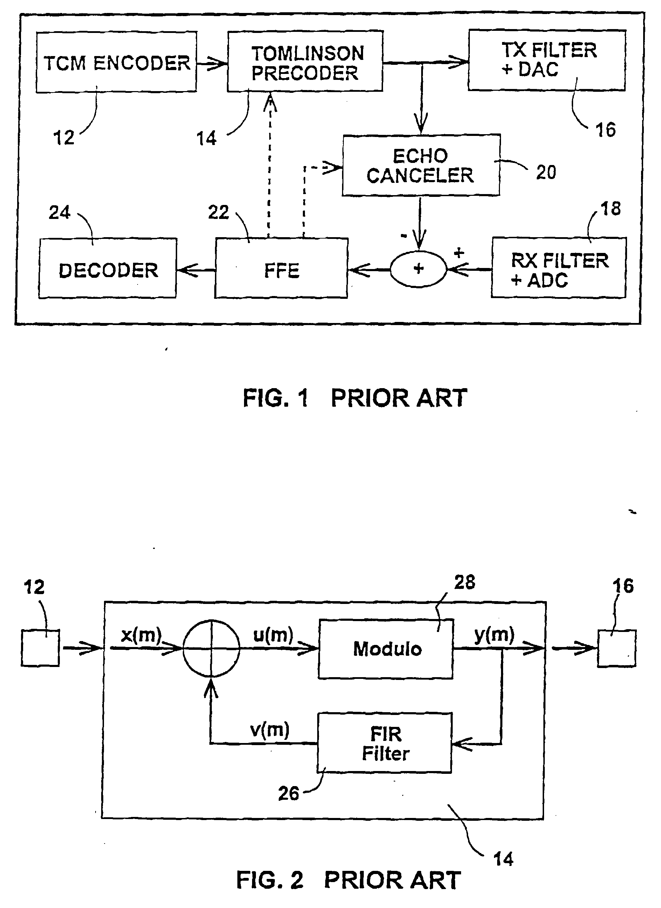

Reference is now made to Fig. 1, a general block diagram of a typical transmitter-receiver (transceiver) 10 employing a Tomlinson precoder 14, which is described by A. K. Aman, R. L. Cupo, and N.A. Zervos, in "Combined Trellis Coding and DFE through Tomlinson Precodeing", *IEEE on Selected Areas in Communications,* vol. 9, no 6, and to Fig. 2 which details the Tomlinson precoder 14. The transceiver 10 comprises a TCM encoder 12, a Tomlinson precoder 14, a transmit filter 16, a receiver Filter 18, an echo canceler 20, a FFF 22, and a TCM decoder 24.

The Tomlinson precoder 14 is incorporated in conjunction with a TCM encoder 12. It achieves the ISI elimination capability of the DFE without error propagation. Furthermore, typically the Tomlinson precoder 14 comprises a Finite Impulse Response (FIR) filter configuration 26 and a modulo unit 28.

Whereas previous ISI eliminators were employed in the receiver, the Tomlinson precoder 14 is implemented in the transmitter, and functions in a manner similar to that of the feedback filter of the DFE. However, in contrast to the DFE which uses predictions in order to eliminate ISI, the Tomlinson precoder 14 determines the ISI from real transmitted symbols, and thus overcomes the error propagation of the DFE.

On high speed band limited channels, the FIR coefficient length can be very high, increasing its complexity significantly. As an example, the High-bit-rate Digital Subscriber Loop 2 (HDSL2) standard specifies 128 - 180 coefficient values, or taps, for the FIR filter 26 used in the Tomlinson precoder 14, making it one of the main power consuming elements, in an HDSL2 modem.

The taps $h(k)$ of the FIR filter 26 are determined by the receiver during startup, and are sent back to the transmitter. The precoder 14 then uses the taps as follows;

The output $v(m)$ of the FIR filter 26 is a function, as follows, of the taps $h(k)$ and previous values of the output $y(m)$ of the Tomlinson precoder 14:

$$v(m) = \sum^{N_h} h(k)y(m - k), \text{ where } N = 128 \text{ up to } 180.$$

A subtractor removes the output $v(m)$ from the input sequence $x(m)$ of symbols, producing a signal as follows:

$$u(m) = x(m) - v(m)$$

The modulo then performs the modulo operation on the signal $u(m)$ to ensure a value between -1 and 1, thereby producing the output signal $y(m)$ of the Tomlinson precoder 14. Mathematically:

$$y(m) = u(m) \div 2d(m), \text{ and}$$

$$-1 < u(m) \div 2d(m) < 1 .$$

where $d(m)$ is the value needed to implement modulo operation.

Since the Tomlinson precoder 14 is implemented in the transmitter, it should comply with the standard specifications of band limited channels to achieve compatibility between transceivers of several vendors. Therefore, for example in the HDSL2, a 128-180-coefficient (tap) long FIR filter 26 is obligatory. It is noted that each tap requires one multiplication operation, which is an expensive operation, both in power and in time.

## SUMMARY OF THE PRESENT INVENTION

It is an objective of this invention to provide an improved transceiver. It is a further objective of this invention to decrease the complexity of a precoder, and specifically its filter.

There is therefore provided, in accordance with a preferred embodiment of the present invention, a trellis coded modulation (TCM) transmitter-receiver (transceiver) including a TCM transmitter for transmitting, and a TCM receiver for receiving and decoding a transmitted signal, wherein said transmitter includes a TCM encoder, a precoder, a transmitter and a TCM receiver. The precoder receives the output of the TCM encoder and removes expected intersymbol interference from the output of the TCM encoder. The precoder includes an Infinite Impulse Response (IIR) filter. The transmitter transmits the output of the precoder. The TCM receiver receives and decodes a transmitted signal.

In accordance with a preferred embodiment of the present invention, the transceiver complies with the High-bit-rate Digital Subscriber Loop 2 standard.

Additionally, in accordance with a preferred embodiment of the present invention, the TCM precoder includes a IIR filter, a subtractor and a modulo unit. The IIR filter filters the precoder output The subtractor subtracts the output of the IIR filter from the input signal. The modulo unit performs the modulo operation on the output of the subtractor, thereby producing the precoder output.

## BRIEF DESCRIPTION OF THE DRAWING

The present invention will be understood and appreciated more fully from the following detailed description taken in conjunction with the appended drawings in which:

Fig. 1 is a block diagram illustration of a prior art transceiver:

Fig. 2 is a block diagram illustration of a prior art Tomlinson precoder used in the transceiver of Fig. 1;

Fig. 3 is a block diagram illustration of a transceiver, constructed and operative according to a preferred embodiment of the present invention; and

Fig. 4 is a block diagram illustration of an IIR based precoder used in the transceiver of Fig. 3, constructed and operative according to a preferred embodiment of the present invention.

## DETAILED DESCRIPTION OF A PREFERRED EMBODIMENT

Applicants realize that HDSL2, as well as other xDSL technologies and many other modem technologies, require low power implementations. The present invention reduces the complexity of precoder 14, while maintaining compliance to the standard, by replacing the FIR filter with an IIR filter.

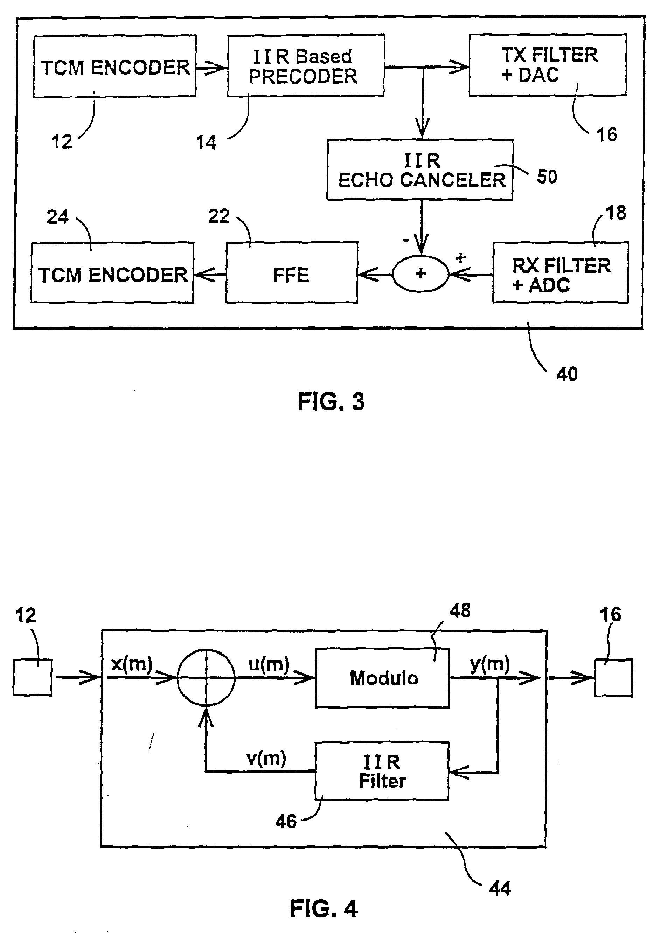

Reference is now made to Fig. 3 which shows a block diagram of a transceiver 40 utilizing an Infinite Impulse Response (IIR) based precoder 44, constructed and operative according to a preferred embodiment of the present invention. Reference is also made to Fig. 4, which shows a block diagram of IIR based precoder 44. All elements that are similar to those in transceiver 10, are similarly numbered and function similarly.

Transceiver 40 comprises TCM encoder 12, IIR based precoder 44, transmit filter 16, receiver filter 18, FFE 22 and TCM decoder 24. Optionally, and as shown in Fig. 1, transceiver 40 also comprises an IIR echo canceler 50. Precoder 44, as shown in Fig. 4, comprises an IIR filter 46 and a modulo unit 48.

Due to the use of IIR filter 46, the IIR based precoder 44 of the present invention, while still complying with the HDSL2 standard and its required performance, requires significantly fewer taps (coefficients), thereby providing a low complexity, low power solution. As an example, for HDSL2, the number of taps required for the IIR filter 46 of the present invention is substantially less than the number of taps required for the FIR filter 26 (Fig. 2), thereby substantially reducing the power consumption and complexity.

The IIR filter 46 uses taps $b(k)$ and $a(k)$ which are determined during startup. The IIR based precoder 44 then uses the taps as follows

The output $v'(m)$ of the IIR filter 46 is a function, as follows, of the taps $h(k)$ and previous values of the output $y'(m)$ of the precoder 44:

$$v'(m) = \sum^{N_b} b(k)y'(m-k) + \sum^{N_a} a(k)v'(m-k)$$

A subtractor removes the output $v'(m)$ from the input sequence $x'(m)$ of symbols, producing a signal as follows:

$$u'(m) = x'(m) - v'(m)$$

The module then performs the modulo operation on the signal $u'(m)$ to ensure a value between -1 and 1, thereby producing the output signal $y'(m)$ of the precoder 44. Mathematically:

$$y'(m) = u'(m) + 2d(m),$$

$$-1 < u'(m) + 2d(m) < 1,$$

$$\text{and } N_b + N_a << N_h$$

where $d(m)$ is the value needed to implement modulo operation.

At startup, the IIR taps $b(k)$ and $a(k)$ are generated from the FIR taps $h(k)$ which the receiver produces. The transformation can be carried out, for example, using the well known PRONY algorithm, which can be found in <u>Advanced Topics in Signal</u> Processing, edited by Joa S. Lim and Alan V, Oppenheim, published by Prentice Hall, 1988, pages 220 - 228, and which is included herein by reference, or an LMS approximation of the PRONY algorithm, or alternatively, the Levinson-Durbin algorithm, which can be found in <u>Digital Communications</u>, edited by Proakis, published by McGraw-Hill, international edition, Appendix A, pages 879-881, and which is included herein by reference. As is well known, the PRONY algorithm converts the many FIR taps $h(k)$ into a few IIR taps. For example, the PRONY algorithm converts the $N_h$ FIR taps $h(k)$ of the HDSL2 standard to $N_a$ taps $a(k)$ and $N_b$ taps $b(k)$.

If necessary, the IIR taps can be updated from the new values of the FIR taps $h(k)$. This can occur at any reasonable periodicity and is typically an off-line operation.

It will be appreciated by persons skilled in the art that the present invention is not limited to what has been particularly shown and described hereinabove. Rather the scope of the present invention is defined only by the claims which follow:

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. A trellis coded modulation (TCM) transmitter-receiver comprising:

   a TCM transmitter for transmitting, and a TCM receiver for receiving and decoding a transmitted signal, wherein said transmitter comprises;
   a TCM encoder;
   a precoder receiving the output of said TCM encoder for removing expected intersymbol interference from said output of said TCM encoder, the precoder comprising an Infinite Impulse Response (IIR) filter; and
   a transmitter for transmitting the output of said precoder

2. A TCM transmitter comprising:

   a TCM encoder;
   a precoder receiving the output of said TCM encoder for removing expected intersymbol interference from said output of said TCM encoder, the precoder comprising an Infinite Impulse Response (IIR) filter; and
   a transmitting unit for transmitting the output of said precoder.

3. A unit according to claim 1 which complies with the High-bit-rate Digital Subscriber Loop 2 standard.

4. A unit according to claim 1 and wherein the precoder comprises:

said IIR filter for filtering said precoder output;

a subtractor for subtracting the output of said IIR filter from said input signal; and

a modulo unit for performing the modulo operation on the output of said subtractor, thereby to produce said precoder output.

5. A TCM preceder which produces a preceder output from an input signal, the precoder comprising:

an IIR filter for filtering said precoder output,

a subtractor for subtracting the output of said IIR filter from said input signal; and

a modulo unit for performing the modulo operation on the output of said subtractor, thereby to produce said precoder output.

FIG. 1   PRIOR ART

FIG. 2   PRIOR ART

TCM ENCODER

IIR Based PRECODER

TX FILTER + DAC

12

14

16

IIR ECHO CANCELER — 50

24

22

18

TCM ENCODER

FFE

RX FILTER + ADC

40

**FIG. 3**

12

48

16

$x(m)$

$u(m)$

Modulo

$y(m)$

$v(m)$

IIR Filter

46

44

**FIG. 4**